# EUROPÄISCHE PATENTANMELDUNG

(11) **EP 4 116 145 A1**
(43) Veröffentlichungstag der Anmeldung: **11.01.2023**
(21) Anmeldenummer: 21184410.5
(22) Anmeldetag: 08.07.2021
(51) Int. Cl.: B60P 1/44

(54) **SYSTEM ZUM SICHEREN BEDIENEN VON HUBLADEBÜHNEN**

(71) Anmelder: Schmidiger GmbH, 6125 Menzberg (CH)
(72) Erfinder: KUGLER, Fabian, 6247 Schötz (CH); STÖCKLI, Urs, 6122 Menznau (CH); SCHMIDIGER, Stefanie, 6102 Malters (CH); SCHMIDIGER, Willi, 6125 Menzberg (CH)
(74) Vertreter: Koelliker, Robert

(57) **Zusammenfassung**

Die vorliegende Erfindung bezieht sich auf ein System (1) zum sicheren Bedienen von Hubladebühnen (2) von LKWs (9) mittels mobiler Fernbedienung (3), wobei das System (1)
- eine Zonen-Lokalisierung (A) mit mindestens zwei Nahbereichssensoren (4) zur Lokalisation der mobilen Fernbedienung (3) aufweist, und/oder
- ein Sensorpaket (B) einen Inertialsensor (5), sowie gegebenenfalls einen Drucksensor (6) und/oder einen Strom-/Spannungssensor (7) umfasst.

Beansprucht wird zudem ein Verfahren zum sicheren Bedienen von Hubladebühnen (2) von LKWs (9) mit dem erfindungsgemässen System (1) sowie die Verwendung des Systems (1).

Durch die Erfindung wird die Arbeitssicherheit des Bedieners der Fernbedienung (3) wesentlich erhöht und das Unfallrisiko deutlich gesenkt, ohne dass der Bediener in der Bewegungsfreiheit eingeschränkt wird.

## Beschreibung

Die vorliegende Erfindung bezieht sich auf ein System zum sicheren Bedienen von Hubladebühnen von LKWs mit einer Zonen-Lokalisierung und/oder einem Sensorpaket, ein Verfahren zum sicheren Bedienen der Hubladebühnen, sowie der Verwendung der Hubladebühnen.

LKWs und deren Anhänger weisen oft einen abschliessbaren Kofferaufbau auf, in welchem Frachtgut - durch den Kofferaufbau von Umwelteinflüssen geschützt - transportiert werden kann. Zum Be- und Entladen des Frachtguts haben sich Hubladebühnen, auch Ladebordwand oder Hebebühne genannt, durchgesetzt. Diese werden am Heck des LKWs, resp. des LKW-Anhängers am Rahmen bzw. an der Hecktraverse, angebracht und umfassen in aller Regel eine Plattform, deren Position mittels Hub- und Neigezylindern bewegt werden kann, ein Hydrauliksystem sowie eine Steuerelektrik mit Bedieneinheit, mit welcher die Lage der Plattform gezielt verändert werden kann.

Die Steuerelektrik resp. Steuerelektronik bewegt mittels Hydrauliksystem resp. Hub- und Neigezylinder die Plattform in je zwei unterschiedliche Richtungen, d.h. mit und gegen die Schwerkraft. Die Vertikalbewegung mittels Hubzylinder erlaubt das Heben und Senken der geöffneten und typischerweise horizontal angeordneten Plattform vom Umschlagplatz, beispielsweise auf Strassenniveau, bis zur Ladekante des Kofferaufbaus, wodurch auch schwere Güter auf einfache Art und Weise von der Ladefläche des LKW auf ein darunter liegendes Niveau - und wieder zurück - gebracht werden können. Die Neigebewegung ermöglicht das Öffnen und Schliessen des Kofferaufbaus mit der Plattform. Beim Schliessen der Plattform wird diese von der geöffneten, horizontal angeordneten Position des Ladeflächen-Niveaus nach oben bis zur vertikalen Position aufgeneigt, wodurch die Plattform die LKW-Hinterseite des Kofferaufbaus verschliesst. Analoges gilt für das Öffnen der Plattform in umgekehrter Richtung. Zudem erlaubt die Neigebewegung das leichte, reversible Abneigen der Plattform von der horizontalen in eine leicht abfallende Position, beispielsweise für die Bodenabsenkung, bis die Plattformspitze den Boden berührt, damit die Plattform mit einem Paletthubwagen hindernisfrei be- und entladen werden kann.

Zur Steuerung der Hubladebühne, und somit der Plattform, hat sich in den letzten Jahren die mobile Fernbedienung durchgesetzt. Diese weist gegenüber der herkömmlichen, fest installierten Bedieneinheit, welche auf einer Seite im hinteren Bereich des Fahrzeugs montiert wird, deutliche Vorteile auf. So kann der LKW-Fahrer die mobile Fernbedienung stets auf sich tragen und die Plattform auch von einem gewissen Abstand bedienen, oder er kann die Plattform bedienen, während er sich mit dem Ladegut auf der Plattform befindet, wodurch er deutlich Zeit spart. Im Vergleich zu kabelgebundenen Fernbedienungen hat ein Bediener, der eine kabellose Fernbedienung stets auf sich trägt, eine viel höhere Bewegungsfreiheit, sodass er seine Arbeit komfortabler und flüssiger verrichten kann.

Nachteilig an der mobilen Fernbedienung ist das erhöhte Risikopotential für Unfälle in gewissen Situationen für den Bediener der Fernbedienung, d.h. in der Regel der LKW-Fahrer, und die nahe Umgebung der bewegten Plattform. Aufgrund von Zeit- und Kostendruck sowie Unachtsamkeit werden allein in der Schweiz jährlich hunderte an Unfällen im Zusammenhang mit der LKW-Hubladebühne mit direkten Kosten im zweistelligen Millionenbereich registriert. Leider mussten sogar einzelne Todesopfer beklagt werden, wo die Unfallursache in direktem Zusammenhang mit einer mobilen Fernbedienung stand. Als Unfallursachen mit mobilen Fernbedienungen sind u.a. folgende Gründe bekannt:
- Der Bediener ist zu nahe an der Plattform, wenn diese sich bewegt;
- Die Plattform wird aus zu grosser Distanz bedient, wo der Bediener keine Übersicht über die Gefahrenzone hat;
- Frachtgut fällt von der Plattform, wenn diese unsachgemäss oder unbeabsichtigt bedient wird;
- Die Last auf der Plattform ist zu hoch oder zu weit aussen an der Plattformkante, sodass Plattform und Ladung beim Bewegen in Schwingung geraten;
- Der Bediener klemmt aus Unachtsamkeit beim Schliessen ein Körperteil, beispielsweise einen Arm, ein;
- Die Plattform wird unbeabsichtigt während der Fahrt bewegt, weil die Fernbedienung eingeschaltet in der Hosentasche verstaut war;
- Die Neigegeschwindigkeit und der max. mögliche Neigungswinkel der Plattform sind nicht begrenzt oder zu hoch, wenn sich auf der Plattform eine Person und eine Ladung befindet, sodass diese umkippt oder herunterfällt; und/oder
- Es werden herkömmliche Fernbedienungen eingesetzt, die für den Betrieb einer Hubladebühne ungeeignet sind oder die ungenügend in das Gesamtsystem integriert sind.

Es ist somit die Aufgabe der Erfindung ein System bereitzustellen, mit welchem das Unfallrisiko deutlich reduziert oder idealerweise ganz verhindert werden soll. Dabei soll der Bediener in seiner Bewegungsfreiheit nicht unnötig eingeschränkt und die Vorteile der mobilen Fernbedienung mit der einfachen Bedienung und der Zeitersparnis sollen erhalten bleiben. Dabei soll die Arbeitssicherheit wesentlich erhöht und die Anzahl Unfälle drastisch reduziert werden. Kurz zusammengefasst soll das System die Arbeit des LKW-Fahrers resp. des Bedieners unterstützen, sodass er seine Arbeit besser, flüssiger und zufriedener erledigen kann als mit den heute üblichen Systemen, und dafür sorgen, dass er trotz Routinearbeit und Hektik bestmöglich vor Arbeitsunfällen geschützt bleibt. Dazu ist es von grösstem Vorteil, wenn das System erkennt, ob sich ein Bediener im Bereich der beweglichen Hubladebühne befindet, ob eine Last auf der Plattform der Hubladebühne ist und ob die Plattform beim Bewegen ein Körperteil und/oder einen Gegenstand einklemmt. Zudem soll es möglich sein, dass abhängig vom Resultat der Zonen-Lokalisierung (A) und den aktuellen Werten des Sensorpakets (B) Bewegungsberechtigungen der Plattform bestimmt und die Bewegungsabläufe der Plattform gezielt gesteuert werden können. Um die Sicherheit des Systems zu erhöhen, soll es idealerweise auch möglich sein, Messgrössen redundant zu bestimmen.

Die komplexe Aufgabe konnte überraschenderweise gelöst werden mit einem System (1) zum sicheren Bedienen von Hubladebühnen (2) von LKWs, umfassend einen LKW (9) mit einem mittels Hubladebühne (2) schliessbaren Ladebereich sowie eine mobile Fernbedienung (3), wobei die Hubladebühne (2) eine Plattform (21), eine Steuerelektronik (22) und ein Hydrauliksystem (23) mit Hubzylinder (231), Neigezylinder (232), Hydraulikleitungen (233), Hydraulikmotor (234) sowie Hydraulikventile (235) umfasst, dadurch gekennzeichnet, dass das System (1)
- eine Zonen-Lokalisierung (A) zur Lokalisation der mobilen Fernbedienung (3) aufweist, umfassend mindestens zwei Nahbereichssensoren (4) zum Empfangen und gegebenenfalls Senden von Signalen der mobilen Fernbedienung (3), wobei
   - An jeder Seite des hinteren Bereichs des LKW (9) ein Nahbereichssensor (4) angeordnet ist, und
   - Die Dämpfung der Signalleistung der Nahbereichssensoren (4) zur LKW-Seite im Richtdiagramm ist zur LKW-Seite um mindestens 6dB höher als in die entgegengesetzte Richtung, und/oder
- Ein Sensorpaket (B) zur Bestimmung, ob die Plattform (21) beladen ist, beim Bewegen einen Gegenstand einklemmt, und/oder zum gezielten Steuern der Bewegungsabläufe der Plattform (21), wobei das Sensorpaket (B)
   b1) Einen Inertialsensor (5), sowie gegebenenfalls
   b2) Einen an den Hydraulikleitungen (233) des Hydrauliksystems (23) angeordneten Drucksensor (6) zur Bestimmung des auf der Plattform (21) befindlichen Gewichts und dessen Lastmoments, und/oder
   b3) Einen Strom-/Spannungssensor (7) zur Bestimmung der elektrischen Leistung, Spannung (75) und/oder Stromstärke (74) des Hydraulikmotors (234)
      umfasst,
   und die Steuerelektronik (22) mit den Nahbereichssensoren (4), dem Inertialsensor (5), dem Drucksensor (6) und/oder dem Strom-/Spannungssensor (7) verbunden ist, um die von den Sensoren (4, 5, 6, 7, 8) empfangenen Signale in der Steuerelektronik (22) zu verarbeiten und die Bewegungen der Plattform (21) mittels Ansteuerung der Hydraulikventile (235) und des Hydraulikmotors (234) gezielt zu steuern und zu überwachen.

Zudem wird auch ein Verfahren zum sicheren Bedienen von Hubladebühnen (2) von LKWs mit dem erfindungsgemässen System (1) beansprucht, umfassend
i) Das Lokalisieren der mobilen Fernbedienung (3) mittels der Zonen-Lokalisierung (A), wodurch Bewegungsberechtigungen der Plattform (21) der Hubladebühne (2) bestimmt werden, und/oder
ii) Das Bestimmen mittels Sensorpaket (B) ob die Plattform (21) beladen ist, beim Bewegen einen Gegenstand einklemmt, und/oder zum gezielten Steuern der Bewegungsabläufe der Plattform (21), wobei
   - Mittels Inertialsensor (5) die Beschleunigung, der Winkel, die Winkelgeschwindigkeit und die Eigenfrequenz der Plattform (21) bestimmt wird, sowie gegebenenfalls
   - Mittels Drucksensors (6) das auf der Plattform (21) befindliche Gewicht gemessen und dessen Lastmoment bestimmt wird, *und*/*oder*
   - Mittels Strom-/Spannungssensor (7) die elektrische Leistung, die Spannung (75) und/oder Stromstärke (74) des Hydraulikmotors (234) bestimmt wird, wobei der Strom vorzugsweise indirekt über den Spannungsabfall an der Minusleitung (73) des Hydraulikmotors (234) gemessen wird.

Beansprucht wird auch die Verwendung des erfindungsgemässen Systems (1) zum sicheren Bedienen von Hubladebühnen (2) von LKWs.

Das erfindungsgemässe System (1), erfindungsgemässe Verfahren und die erfindungsgemässe Verwendung weisen überraschenderweise viele Vorteile auf.

Die Zonen-Lokalisierung (A) lokalisiert die mobile Fernsteuerung (3) und somit deren Bediener, d.h. in der Regel der LKW-Fahrer. Dadurch kennt das System (1) wo sich der Bediener in Relation zur Plattform (21) der Hubladebühne (2) befindet. Dies erlaubt der Steuerelektronik (22) das Bestimmen von Bewegungsberechtigungen der Plattform (21). Mit anderen Worten: befindet sich der Bediener noch im Fahrerhaus (92), wo er keine Sicht auf den Gefahrenbereich der Plattform (21) hat, oder zu weit von dieser entfernt, mehr als beispielsweise 10 m in alle Richtungen, dann werden beispielsweise alle Bewegungsberechtigungen vollständig gesperrt. Befindet sich der Bediener hingegen an einer sicheren Position (Z1) im Nahbereich der Plattform (21), wo der Gefahrenbereich überblickbar und das Risiko gering ist, dass der Bediener durch die Plattform (21) verletzt wird, dann werden beispielsweise vollständige Bewegungsberechtigungen erteilt. Befindet sich der Bediener auf der Plattform (21) und ist diese in einer beispielsweise horizontalen Winkelstellung, was der Zone (Z5) entspricht, dann werden Bewegungen der Plattform (21) beispielsweise auf einen Winkelbereich von +- 10° und die Winkelgeschwindigkeit auf beispielsweise 3°/s eingeschränkt. Befindet sich der Bediener genügend weit, beispielsweise einige Meter, von der Plattform (21) entfernt, wird die Bewegungsfreiheit der Plattform (21) nicht eingeschränkt. Befindet sich hingegen der Bediener beim Öffnen der geschlossenen, d.h. in vertikaler Richtung angeordneten, Plattform (21) im Bereich, wo die zu öffnende Plattform (21) zu liegen kommt, kann die Steuerelektronik (22) eine vollständige Öffnung der Plattform (21) - beispielsweise schon ab einem Neigungswinkel von 45° - blockieren. Dies verhindert, dass der Bediener durch die Plattform (21) verletzt wird. Eine noch grössere Gefahr ergibt sich, während dem Schliessvorgang der Plattform (21), insbesondere während der letzten 30° vor der vertikalen Endposition: die Steuerelektronik (22) kann eine vollständige Schliessung der Plattform (21) blockieren, falls sich der Bediener nicht an einer als dafür geeignet definierten, sicheren Position aufhält. Die Aufzählung lässt sich beliebig fortsetzen für die weiteren Zonen, sodass sich das System (1) konform mit den geltenden Normen der geografischen Einsatzregion oder den für die Arbeitssicherheit verantwortlichen Person oder Organisation konfigurieren und betreiben lässt.

Mittels Sensorpaket (B) wird bestimmt, ob die Plattform (21) der Hubladebühne (2) i) beladen ist und/oder ii) beim Bewegen, d.h. Heben, Senken, Öffnen und Schliessen, einen Körperteil des Bedieners, beispielsweise einen Arm, oder einen Gegenstand, beispielsweise einen Teil der Fracht, einklemmt. Zudem erlaubt das Sensorpaket (B) iii) das gezielte Steuern der Bewegungsabläufe der Plattform (21). Überraschenderweise ist es möglich, mittels weniger Sensoren die verschiedenen zu bestimmenden Endgrössen wie Beladung der Plattform (21) redundant zu bestimmen, wodurch das System (1) noch sicherer und robuster wird.

Die Bestimmung, ob die Plattform (21) i) beladen ist, kann überraschenderweise mittels Sensorpaket (B) auf verschiedene Arten, d.h. redundant, erfolgen. So kann mittels Inertialsensor (5), gegebenenfalls einen Drucksensor (6) und/oder einen Strom-/Spannungssensor (7) ermittelt werden, ob auf der Plattform (21) ein Gewicht ist. Zudem kann das Gewicht der Last bestimmt werden, indem mittels Drucksensor (6) der Öldruck bestimmt wird, wenn die Hydraulikventile (235) der Hubzylinder (231) geöffnet resp. geschlossen sind. Alternativ kann das Gewicht der Last mittels Strom-/ Spannungssensor (7) über die Leistung des Hydraulikmotors (234) bestimmt werden, wenn die Plattform (21) vertikal nach oben bewegt wird und die Hydraulikventile (235) der Hubzylinder (231) geöffnet sind. Zudem kann mittels Inertialsensor (5) die Eigenfrequenz der Plattform (21) ermittelt werden, wodurch das Lastmoment und gegebenenfalls der Ort, wo sich das Gewicht befindet, bestimmt werden kann. Alternativ kann das Lastmoment bestimmt werden, indem mittels Drucksensor (6) der Öldruck des Hydrauliksystems (23) bestimmt wird, wenn das Hydraulikventil mindestens eines Neigezylinders (232) geöffnet wird. Mit einer weiteren Alternative kann mittels Strom-/ Spannungssensor (7) die Leistung des Hydraulikmotors (234) gemessen werden, wenn die Plattform (21) nach oben aufgeneigt wird, wenn die Hydraulikventile (235) der Neigezylinder (232) geöffnet sind. Die Tatsache, dass mittels unterschiedlicher Methoden bestimmt werden kann, ob die Plattform (21) beladen ist oder nicht, ist von grösstem Vorteil, da ein einzelner Sensor nur einen Teil der möglichen Lastsituationen und Ausführungsformen der Hubladebühne (2) abdeckt und somit in der täglichen Praxis nicht zuverlässig genug arbeiten würde. Somit erlaubt die erhaltende Redundanz einen breiteren Anwendungsbereich und eine weitgehende Sicherheit, die vom Anwender auch so wahrgenommen wird, sodass dieser das System akzeptiert und wertschätzt.

Wenn die Plattform (21) ii) beim Bewegen einen Körperteil des Bedieners und/oder oder einen Gegenstand einklemmt, erkennt die Steuerelektronik (22) dies sofort und die Plattform (21) kann sofort gestoppt werden, wodurch der Bediener - oder andere Personen - geschützt und Unfälle vermieden werden können. Daher wird dieser Effekt auch «Einklemmschutz» genannt. Überraschenderweise reagiert das Sensorpaket (B) in Bezug auf den Effekt «Einklemmschutz» äusserst sensibel, sodass eine Kraft auf den eingeklemmten Körperteil oder Gegenstand von weniger als beispielsweise 500 N, insbesondere von weniger als 100 N, wirken, bevor die Plattform (21) gestoppt wird, was einer Gewichtskraft von 50 kg resp. lediglich 10 kg entspricht. Zudem kann überraschenderweise der Einklemmschutz mittels Sensorpaket (B) auf verschiedene Arten und somit ebenfalls redundant erfolgen.

So werden zunächst für den Einklemmschutz Referenzwerte der leeren Plattform (21) ermittelt, und anschliessend bei jedem weiteren Heben, Senken, Öffnen oder Schliessen der Plattform (21) die aktuell gemessenen Werte mit den erwarteten Referenzwerten verglichen. Bei einer plötzlichen Änderung der Messwerte und/oder bei einer vordefinierten maximalen Abweichung des Messwerte-Verlaufes gegenüber dem Verlauf der Referenzwerte für die Bewegung der Plattform (21), wird die Plattform (21) gestoppt. Zur Bestimmung der aktuellen sowie der Referenzwerte werden mittels
- Inertialsensor (5) die Winkel-Beschleunigung, Winkelgeschwindigkeit und der Winkel der Plattform (21),
- Drucksensor (6) der Druck der Hydraulikleitungen (233) bei geöffnetem Hydraulikventil (235) des Neigezylinders (232), und/oder
- Strom-/Spannungssensor (7) die Leistungsaufnahme des Hydraulikmotors (234)
ermittelt.

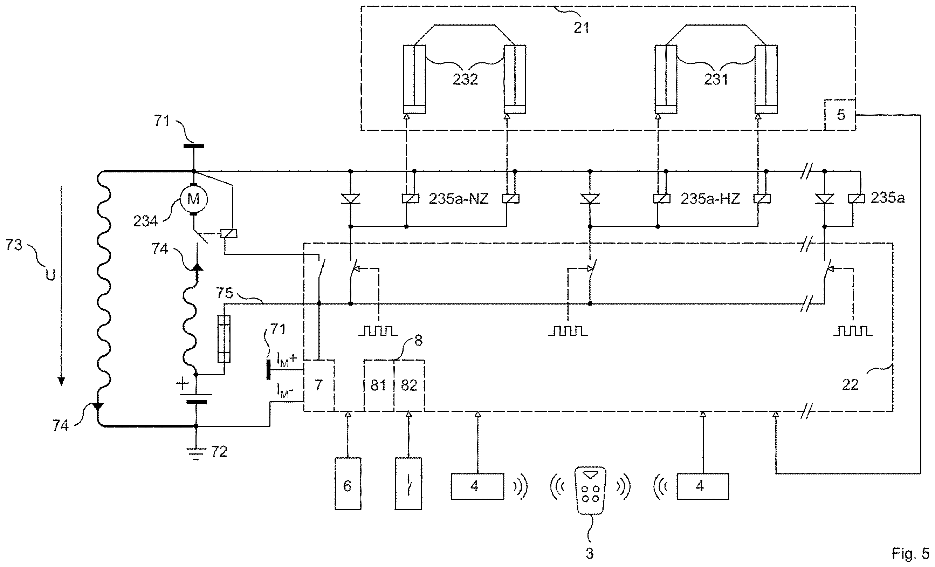

Wenn iii) die Bewegungsabläufe der Plattform (21) gezielt gesteuert werden soll, erfolgt dies mittels Inertialsensor (5) des Sensorpakets (B) sowie der Steuerelektronik (22). Zudem wird mittels Inertialsensor (5), Drucksensor (6) und/oder Strom-/Spannungssensor (7) ermittelt, ob die Plattform (21) beladen ist. Anschliessend werden die Hydraulikventile (235), als on/off Magnet-Ventile (235a) ausgebildet, mittels Pulsweitenmodulation (PWM) durch die Steuerelektronik (22) so angesteuert, dass die Neigungsgeschwindigkeit der Plattform (21) begrenzt, auf einen gemäss Bewegungsberechtigung vordefinierten Wert abgebremst, oder gestoppt wird. Dieser Vorgang wird auch «Plattformbremse» genannt. Überraschenderweise können damit die Bewegungen der Plattform (21) erstaunlich fein eingestellt werden, ohne dafür teure Proportionalventile verwenden zu müssen. Zur Pulsweitenmodulation wird vorgeschlagen, die Magnet-Ventile (235a) mit Spannungspulsen der Frequenz von vorzugsweise 1000 Hz, mindestens 200 Hz und maximal 5000 Hz zu beaufschlagen Die Ansteuerfrequenz ist dadurch um mindestens eine Grössenordnung, also Faktor 10, höher als die mechanische Trägheit der Ventile (235a) und der zeitliche Verlauf des Stroms in der Ansteuerspule kommt einem reinen Gleichstrom nahe, was zu reproduzierbareren Ergebnissen für die Proportionalsteuerung der Hydraulikzylinder (231, 232) führt. Zudem wird vorgeschlagen, die derart angesteuerten Ventile (235a) wie in Figur 5 gezeigt mit einer Freilaufdiode elektrisch parallel zu schalten, welche sich aus Sicherheitsüberlegungen vorteilhafterweise ausserhalb der Steuerelektronik (22) befinden sollte. Durch die Pulsweitenmodulation mit genügend hoher Frequenz und der erwähnten Freilaufdiode ergibt sich aufgrund der Induktivität der Ansteuerspule ein nahezu reiner resp. wenig pulsierender Gleichstrom in der Ansteuerspule der Ventile (235a). Als zusätzlicher vorteilhafter Nebeneffekt ergibt sich eine um mindestens Faktor zwei reduzierte elektrische Ansteuerleistung der Ventile (235a), verglichen mit der herkömmlichen Ansteuerung, wo während der ganzen aktiven Zeit die volle Versorgungsspannung des LKW an den Ansteuerspulen anliegt. Dadurch wird die Batterie des LKW geschont, was vor allem im Winter bei tiefen Temperaturen die mögliche Betriebsdauer der Hubladebühne (2) verlängert und die Fahrzeugbatterie schont.

Somit erlaubt das erfindungsgemässe System (1), das erfindungsgemässe Verfahren sowie die erfindungsgemässe Verwendung, mindestens die vier grundlegenden Bewegungen der Plattform (21) in einer zeitsparenden Weise zu überwachen, zu steuern und zu regeln. Dadurch ist der Bediener und seine unmittelbare Umgebung trotz der mobilen Fernsteuerung nicht gefährdet. Das System (1) verhält sich automatisch und konform mit den geltenden Vorschriften zur Arbeitssicherheit und Unfallverhütung. Denn das System (1) und das Verfahren ermöglichen mittels den verschiedenen Sensoren, dass der aktuelle Standort des Bedieners lokalisiert wird, dass es gefährliche und unerwartete Situationen automatisch detektiert, indem es Abweichungen vom Normalzustand erkennt und dass es über die elektromagnetischen Hydraulikventile (235) einen jeweils sicheren Zustand einleiten oder herbeiführen kann.

### Das System

Das erfindungsgemässe System (1) ist besonders geeignet zum sicheren Bedienen von Hubladebühnen (2), d.h. Ladebordwand oder Hebebühne, von LKWs. Der Begriff LKW (9) steht für Lastkraftwagen, d.h. Zugmaschinen, und umfasst Anhänger, welche von Lastkraftwagen gezogen werden. Mit eingeschlossen im Begriff des LKW (9) sind auch kleinere Fahrzeuge des Gütertransports mit einem Gesamtgewicht unter 3.5 t, wenn diese mit einer Hebebühne (2) ausgerüstet sind. Der LKW (9) weist in aller Regel einen Kofferaufbau auf, in welchem Gegenstände resp. Frachtgut frei von Wettereinflüssen gelagert und transportiert werden können.

Das System (1) umfasst mindestens einen LKW (9) mit einem mittels Hubladebühne (2) schliessbaren Ladebereich sowie eine mobile Fernbedienung (3). Dabei umfasst die Hubladebühne (2) eine Plattform (21), eine Steuerelektronik (22) und ein Hydrauliksystem (23) mit typischerweise zwei Hubzylinder (231) und zwei Neigezylinder (232), Hydraulikleitungen (233), Hydraulikmotor (234) sowie Hydraulikventilen (235). Die Hydraulikventile (235) sind bevorzugt als elektromagnetische Ventile ausgebildet. Dabei ist die Hubladebühne (2) am Heck des LKWs (9) am Fahrzeugrahmen resp. an der Hecktraverse angebracht.

Die horizontal angeordnete Plattform (21) wird durch Betätigung der Hubzylinder (231) mittels der Ventile (235a-HZ) vertikal bewegt, wodurch die Plattform gehoben resp. gesenkt werden kann. Durch Betätigung der Neigezylinder (232) mittels der Ventile (235a-NZ) wird die Plattform (21) geneigt, d.h. die im 90° Winkel angeordnete, geschlossene Plattform (21) kann mittels Neigezylinder (232) in eine waagrechte oder leicht abfallende Position reversibel verschoben werden. Die Hydraulikzylinder (231, 232) sind Teil des Hydrauliksystems (23) und werden durch Öffnen resp. Schliessen der Hydraulikventile (235) sowie gegebenenfalls durch Umschalten des Wegeventils (235-WV) für die Flussrichtung des Hydrauliköls sowie den Hydraulikmotor (234), welcher Hydrauliköl durch die geöffneten Hydraulikventile (235) in die Hydraulikzylinder (231, 232) pumpt, bewegt. Der Hydraulikmotor (234) besteht hauptsächlich aus dem elektrischen Antriebsmotor, der typischerweise über einen elektromagnetisch betätigten Schalter ein- und ausgeschaltet wird und einer Hydraulikpumpe, die über eine Antriebswelle mit dem Antriebsmotor verbunden ist.

Das System (1) weist zudem eine Zonen-Lokalisierung (A) zur Lokalisation der mobilen Fernbedienung (3) auf, und/oder ein Sensorpaket (B) umfassend einen Inertialsensor (5) sowie einen Drucksensor (6) und/oder einen Strom-/Spannungssensor (7). Dabei ist das Sensorpaket (B) zur Bestimmung geeignet, ob die Plattform (21) beladen ist, beim Bewegen, d.h. Heben, Senken, Öffnen und Schliessen, einen Gegenstand einklemmt, und/oder zum gezielten Steuern der Bewegungsabläufe der Plattform (21).

Anhand der Zonen-Lokalisierung (A) mit der mobilen Fernbedienung (3) kann der Standort des Bedieners bestimmt werden und gemäss der entsprechenden Zone, in welcher der Bediener zugeordnet wird, die Erlaubnis für bestimmte Plattform (21) Bewegungen erteilen oder verweigern. Da mit der Zonen-Lokalisierung (A) jedoch der Standort des Bedieners im Bereich der Plattform (21), und somit hinter dem LKW (9), nicht genügend exakt bestimmt werden kann, ermöglicht das Sensorpaket (B) die Bestimmung, ob sich eine Last auf oder neben der Plattform (21) aufhält. Dabei wird angenommen, dass sich der Bediener zusammen mit dem Frachtgut auf der Plattform (21) befindet. Denn vom Standpunkt der Sicherheit spielt es keine Rolle, ob sich der Bediener zusammen mit Frachtgut auf der Plattform (21) befindet oder nicht, da das Gefährdungspotential durch die Last der Ladung bereits gegeben ist und die Plattform (21) deshalb nur eingeschränkt bedienbar sein darf.

Die Steuerelektronik (22) des Systems (1) ist mit den Nahbereichssensoren (4), dem Inertialsensor (5) sowie dem Drucksensor (6) und/oder dem Strom-/Spannungssensor (7) verbunden, um die von den Sensoren (4, 5, 6, 7, 8) empfangenen Signale in der Steuerelektronik (22) zu verarbeiten und die Bewegungen der Plattform (21) mittels Ansteuerung der Hydraulikventile (235) und des Hydraulikmotors (234) gezielt zu steuern und zu überwachen.

Die Steuerelektronik (22) erlaubt aus den Rohdaten der Sensoren weitere physikalische Grössen zu bestimmt und Entscheidungen zur Bedienersicherheit zu treffen. Beispielsweise kann aus den Beschleunigungsdaten zweier Achsen des mehrachsigen Inertialsensors (5) der resultierende Neigungswinkel der Plattform (21) berechnet werden. Zudem kann aus dem zeitlichen Verlauf dieser Neigungsdaten die Winkelgeschwindigkeit der Plattform (21) berechnet werden.

Bei der Bestimmung, ob die Plattform (21) beladen ist, beim Bewegen, d.h. Heben, Senken, Öffnen und Schliessen, einen Gegenstand einklemmt, und/oder zum gezielten Steuern der Bewegungsabläufe der Plattform (21), ist es wichtig zu wissen, ob die Plattform (21) mit einem Gewicht beladen ist oder nicht, und falls ja, wie gross das Lastmoment ist. Beim Gewicht spielt es keine Rolle, wo das Gewicht, d.h. die Last, auf der Plattform (21) und wo sich der Schwerpunkt der Last befindet. Die Bestimmung des Lastmoments, d.h. das Produkt aus Gewicht und der Distanz zur Ladekante am fahrzeugseitigen Ende, gibt Auskunft, ob die Last in der Nähe dieser Ladekante, also am inneren Ende der Plattform (21) oder am äusseren Ende der Plattform - also nahe der Plattformspitze - angeordnet ist. Denn wenn sich die Last im Bereich der Plattformspitze befindet, ist das maximal erlaubte Gewicht gemäss dem Lastdiagramm geringer als die Nennlast und das Gefahrenpotential ist erhöht, entsprechend ist es sinnvoll, Neigebewegungen mit stark reduzierter Geschwindigkeit und besonders sanft auszuführen, um das Ladegut stabil zu halten.

Wenn die Plattform (21) in ungefähr waagerechter Lage mittels Beladung, Entladung, Start oder Stopp angeregt, beispielsweise mittels einer Plattform-Bewegung oder mechanisch mit einem Impuls, dann baut sich eine Schwingung an der Plattform (21) mit charakteristischer Eigenfrequenz und Dämpfung auf. Die Eigenfrequenz ist umgekehrt proportional zur Wurzel der Masse bzw. des Lastmoments. Je mehr Gewicht sich also auf der Plattform (21) befindet und je weiter aussen sich der Schwerpunkt dieses Gewichts auf der Plattform (21) befindet, desto tiefer ist diese mechanische Eigenschwingung der Plattform (21) und desto höher ist die Periodendauer dieser mit der Zeit abklingenden Pendelschwingung der Plattform (21). Beispielsweise liegt die Eigenfrequenz einer leeren Plattform (21) bei 5Hz, während sie bei zusätzlicher Belastung mit 200kg in der Plattform-Mitte auf 3.5 Hz absinkt. Kennt man also die Eigenfrequenz der leeren Plattform (21), lässt sich aus der gemessenen Eigenfrequenz das aktuelle Lastmoment und somit die Belastung der Plattform (21) berechnen. Wird die Plattform (21) mit einem Impuls zu dieser Eigenschwingung angeregt, lässt sich die Frequenz und somit das Lastmoment aus mehreren Sensordaten bestimmen. Ob und gegebenenfalls wie stark die Plattform (21) belastet ist, wird mittels Informationen vom Sensorpaket (B) bestimmt.

### Die Zonen-Lokalisierung (A)

Die Zonen-Lokalisierung (A) des erfindungsgemässen Systems (1) ist geeignet zur Lokalisation der mobilen Fernbedienung (3) und somit des Bedieners der Fernsteuerung (3). Dazu wird das Umfeld des LKW (9) und der Plattform (21) bevorzugt in verschiedene Zonen eingeteilt:
- Eine erste für den Bediener sichere Zone Z1, wo eine uneingeschränkte Bedienung der Plattform (21) erlaubt ist, wobei die Zone Z1 eine Maximaldistanz D1 zu mindestens einem Nahbereichssensor (4) von beispielsweise 0.5 bis 1 m aufweist, sodass der Bediener die Plattform (21) gut überblicken kann, durch diese aber nicht gefährdet ist und sich auch nicht auf derselben aufhalten kann.
- Eine zweite Zone Z2 wird durch den Bereich der Plattform (21) in waagerechter Position bestimmt und umfasst zusätzlich eine seitliche und nach hinten ausgerichtete Maximaldistanz D2 zu den Plattformenden, beispielsweise von 1 bis 2 m. In dieser Zone befindet sich der Bediener je nach Neigewinkel der Plattform (21) direkt auf oder zumindest in der Nähe derselben.
- Eine dritte Zone Z3 bestimmt den maximalen Arbeitsbereich des Bedieners, wo eine eingeschränkte Bedienung erlaubt ist. Die Zone Z3 weist zu mindestens einem Nahbereichssensor (4) eine Maximaldistanz D3 von beispielsweise 5 bis 8 m auf. In dieser Zone ist die Sicht auf die Plattform (21) nur teilweise gegeben, dafür besteht keine Gefahr für die eigene Person.
- Eine vierte Zone Z4 umfasst alles ausserhalb der Zone Z3, in welcher keine Bedienung der Plattform (21) erlaubt ist. Insbesondere ist das Fahrerhaus (92) Bestandteil dieser Zone, damit weder während der Fahrt noch vor dem Aussteigen irgendwelche Bewegungen der Plattform (21) ausgeführt werden können.
- Eine fünfte Zone Z5 umfasst ausschliesslich die Plattform (21), indem durch das Sensorpaket (B) die Plattform (21) als beladen oder leer erkannt wird.

Dabei bestimmt die Steuerelektronik (22) aufgrund der jeweiligen Zonen Z1 bis Z5 sowie des mittels Inertialsensor (5) bestimmten aktuellen Plattformwinkels die zonen-spezifischen, vordefinierten Bewegungsberechtigungen der Plattform (21), insbesondere die maximale Winkelgeschwindigkeit, beispielsweise 4°/sec, und der max. Neigungswinkel, beispielsweise +/-10°, welche nicht überschritten werden dürfen.

Die Zonen-Lokalisierung (A) umfasst mindestens zwei Nahbereichssensoren (4) zum Empfangen und gegebenenfalls zum Senden von Signalen von resp. an die mobile Fernbedienung (3), wobei
- An jeder Seite, d.h. an der in Fahrtrichtung linken und rechten Seite, des hinteren Bereichs des LKW (9) ein Nahbereichssensor (4) angeordnet ist, und
- Die Dämpfung der Signalleistung der Nahbereichssensoren (4) zur LKW-Seite, d.h. in Richtung Kofferaufbau des LKW (9), im Richtdiagramm, d.h. Antennendiagramm, ist zur LKW-Seite um mindestens 6dB höher als in die entgegengesetzte Richtung, d.h. zur LKW (9) abgewandten Seite.

Die mobile Fernbedienung (3) kommuniziert mit der Steuerelektronik (22) bevorzugt mittels Funkwellen, bevorzugt im UHF-Band im Bereich von 300 MHz bis 3 GHz; Ultraschallwellen, bevorzugt im Frequenzbereich von 15 kHz bis 200 kHz; Magnetwellen, bevorzugt im Bereich von 50 kHz bis 200 kHz; Lichtwellen, bevorzugt im Bereich der Infrarotwellen bis Ende des sichtbaren Lichtspektrums und somit von ca. 4000 nm bis 400 nm; und/oder kabelgebunden. Ist die Fernbedienung (3) kabelgebunden und erfolgt die Datenübertragung der Signale ebenfalls kabelgebunden, dann beschränkt sich die Lokalisierung ausschliesslich auf die Zone Z5 mittels Sensorpaket (B).

In einer Ausführungsform weist die mobile Fernbedienung (3) einen mehrachsigen Inertialsensor (5) auf. Dies erlaubt die Bestimmung der Beschleunigung der Fernbedienung (3), was besonders wichtig ist, wenn die Fernbedienung (3) - und somit der Bediener - sich auf der Plattform (21) befindet. Dadurch kann die Richtung, der Wert und der Zeitpunkt der Plattform-Beschleunigung bestimmt werden. Da die Plattform (21) ja mit derselben mobilen Fernbedienung (3) in eine bestimmte Richtung bewegt wird, kann die mobile Fernbedienung (3) oder die Steuerelektronik (22) mittels Inertialsensor (5) eine Korrelation der beiden Bewegungen berechnen. Somit weiss das System, ob sich der Bediener auf oder neben der Plattform (21) befindet. Somit ist dies eine alternative Möglichkeit zur Lokalisierung der Zone Z5.

Die Nahbereichssensoren (4) sind bevorzugt auf Metall angeordnet und werden vorteilhafterweise so platziert, dass sie maximal 50 mm, bevorzugt maximal 30 mm, insbesondere höchstens 15 mm aus der bestehenden Fläche - ohne Sensoren - hervorragen. Dies wird typischerweise durch eine flache Bauweise der Nahbereichssensoren (4) erzielt und/oder indem die Nahbereichssensoren (4) unterhalb des Kofferaufbaus wenige cm zurückversetzt angeordnet werden. Besonders bevorzugt wird eine flache und für die direkte Montage auf einer ausgedehnten Metallfläche - beispielsweise der untere Teil des Kofferaufbaus oder des Fahrzeugrahmens - geeignete Sensorart verwendet, welche die Signalausbreitung gegen die Montagefläche, d.h. die genannte Metallfläche, hin stark dämpfen oder reflektieren.

In einer bevorzugten Ausführungsform sind die Nahbereichssensoren (4) der Zonen-Lokalisierung (A)
- am hinteren Bereich des LKW (9) einander gegenüber symmetrisch angeordnet,
- 0 bis 1.5 m, bevorzugt 0.3 m bis 1 m, gemessen in horizontaler Richtung von der Heckkante des LKW (9) angeordnet. Zudem sind sie in vertikaler Richtung bevorzugt am unteren Ende des LKW-Kofferaufbaus und/oder ca. in 1 m Höhe ab Boden angeordnet;
- am seitlichen, unteren Bereich des LKW-Koffers (91) angeordnet, wobei der Koffer (91) bevorzugt als Reflektor für die Signalübertragung zwischen den Nahbereichssensoren (4) und der mobilen Fernbedienung (3) ausgebildet ist und somit bevorzugt eine Metallfläche zur Befestigung der Nahbereichssensoren (4) umfasst. Dies ist insbesondere dann besonders vorteilhaft, wenn die Signalübertragung der mobilen Fernbedienung (3) auf Funkwellen basiert. Der Einsatz eines Reflektors bewirkt eine besonders gute Richtwirkung der Nahbereichssensoren (4). Dabei umfasst der Begriff Koffer (91) auch Kastenaufbauten und Kofferaufbauten;
- in Form von Patchantennen ausgebildet, d.h. die Nahbereichssensoren (4) liegen in Form von Patchantennen vor, insbesondere wenn die Nahbereichssensoren (4) auf Metall montiert sind. Dabei versteht der Fachmann unter Patchantenne eine besonders flache Antennenvariante, die eine gute Richtwirkung aufweist, insbesondere wenn sie mit einer dahinter liegenden, als Reflektor dienenden Metallfläche kombiniert ist und somit die Signalausbreitung gegen die Montagefläche hin stark bedämpfen oder reflektieren. So kann ein Einzelelement einen Gewinn von annähernd 10 dBi erreichen. Geeignete Patchantennen sind dem Fachmann bekannt und im Handel erhältlich.

### Das Sensorpaket (B)

Das Sensorpaket (B) ist geeignet zur Bestimmung, ob die Plattform (21) i) beladen ist, ii) beim Bewegen einen Gegenstand einklemmt, und/oder iii) zum gezielten Steuern der Bewegungsabläufe der Plattform (21).

Ist die Plattform (21) beladen, wird angenommen, dass sich der Bediener der mobilen Fernbedienung (3) auf der Plattform (21) aufhält. Ist die Plattform (21) nicht beladen, hält sich der Bediener neben der Plattform (21) auf. Denn wenn die Plattform (21) beladen ist, müssen die Bewegungsabläufe der Plattform (21) eingeschränkt und gezielt gesteuert werden.

Wenn die Plattform (21) beim Bewegen einen Gegenstand einklemmt, müssen die Bewegungsabläufe sofort geändert werden, d.h. die Bewegung der Plattform (21) muss in aller Regel gestoppt werden.

Das Sensorpaket (B) umfasst
b1) Einen Inertialsensor (5), sowie gegebenenfalls
b2) Einen an den Hydraulikleitungen (233) des Hydrauliksystems (23) angeordneten Drucksensor (6) zur Bestimmung des auf der Plattform (21) befindlichen Gewichts und dessen Lastmoments, und/oder
b3) Einen Strom-/Spannungssensor (7) zur Bestimmung der elektrischen Leistung, Spannung (75) und/oder Stromstärke (74) des Hydraulikmotors (234),

Das Sensorpaket (B) kann zudem auch mindestens einen Temperatursensor (81) umfassen. Dies erlaubt temperaturabhängige Messparameter temperaturunabhängig zu erhalten.

Der Inertialsensor (5) ist ein wesentlicher Bestandteil, und somit zwingender Sensor, des Sensorpakets (B). Aus Sicherheitsgründen kann der Inertialsensor (5) auch redundant resp. mehrfach vorhanden sein.

Unter dem Begriff Inertialsensor (5) wird erfindungsgemäss eine mehrachsige Inertial Measurement Unit, d.h. IMU, verstanden. Eine IMU enthält dabei mehrere Trägheitssensoren zur Messung der Erdbeschleunigung und der Winkelgeschwindigkeit. Der Inertialsensor (5) umfasst also sowohl einen mehrachsigen Beschleunigungssensor wie auch vorteilhafterweise einen mehrachsigen Gyrosensor. Dabei bedeutet mehrachsig, dass in mindestens zwei, bevorzugt in drei räumlichen Achsen, typischerweise in den x-, y- und z-Koordinaten, mikromechanische Trägheitssensoren angeordnet sind zur Bestimmung der Beschleunigungskräfte (bei Beschleunigungssensoren) und/oder der Drehrate bzw. Winkelgeschwindigkeit (bei Gyrosensoren). Im bewegungslosen Zustand misst der Inertialsensor (5) die Erdbeschleunigung. Mittels Trigonometrie wird die räumliche Lage bzw. der räumliche Winkel des Sensors, und somit der Plattform (21), berechnet. Verändern sich die Beschleunigungswerte infolge einer Bewegung der Plattform (21), kann die momentane Geschwindigkeit sowie der zurückgelegte Weg oder Winkel berechnet werden. Enthält der Inertialsensor (5) auch einen Gyrosensor, ermittelt dieser selbst eine Drehrate, sodass die Winkelgeschwindigkeit direkt gemessen und nicht mithilfe der Angaben des Beschleunigungssensors und unter Verwendung der Zeitinformation ermittelt werden muss. Dies reduziert den Berechnungsaufwand für die Steuerelektronik (22). Die Anwesenheit eines Gyrosensors ist nicht zwingend, jedoch vorteilhaft, da damit die Rechenleistung geringgehalten werden kann.

Der Inertialsensor (5) misst die Beschleunigung und/oder die Drehbewegung der Plattform (21). Mit Hilfe des Inertialsensors (5)
- kann bestimmt werden, ob die Plattform (21) beladen ist,
- kann bestimmt werden, wie gross die Eigenfrequenz der Plattform (21) ist,
- kann bestimmt werden, wie gross die Winkel-Beschleunigung, Winkelgeschwindigkeit und der Winkel der Plattform (21) ist,
- können die Bewegungsabläufe der Plattform (21) gezielt gesteuert und gegebenenfalls die Plattform (21) sofort gestoppt werden, sollte die Plattform (21) ein Körperteil oder einen Gegenstand einklemmen, indem zunächst Referenzwerte der leeren Plattform (21) ermittelt werden, und anschliessend bei jedem weiteren Heben, Senken, Öffnen oder Schliessen der Plattform (21) die gemessenen tatsächlichen Werte mit den erwarteten Referenzwerten verglichen werden, wobei bei einer plötzlichen Änderung der Messwerte und/oder bei einer Abweichung des Messwerte-Verlaufes gegenüber dem Verlauf der Referenzwerte die Bewegung der Plattform (21) gestoppt wird,
- können die Hydraulikventile (235), welche bevorzugt als herkömmliche «on/off»-Magnet-Ventile (235a) ausgebildet sind, mittels Pulsweitenmodulierung (PWM) so gesteuert werden, wie wenn die Hydraulikventile (235) als Proportionalventile ausgebildet wären.

In einer bevorzugten Ausführungsform ist der Inertialsensor (5) an der Plattform (21) angeordnet, bevorzugt an einer vor Beschädigung gut geschützten Stelle aussen, d.h. an der Unterseite der Plattform (21), wenn die Plattform (21) in waagrechter Position ist, und im unteren Teil der - vertikal angeordneten - Plattform, oder an ähnlicher Stelle innen in einem Hohlraum der Plattform.

Geeignete Inertialsensoren (5) sind dem Fachmann bekannt und im Handel erhältlich.

Der Drucksensor (6) ist an den Hydraulikleitungen (233) des Hydrauliksystems (23) angeordnet und dient zur Bestimmung des auf der Plattform (21) befindlichen Gewichts und dessen Lastmoments. Der Drucksensor (6) misst den Öldruck des Hydrauliköls, welches sich im Hydrauliksystem (23) befindet. Durch gezieltes Öffnen resp. Schliessen der Hydraulikventile (235) der Neige- (232) und Hubzylinder (231) kann auch der Öldruck innerhalb der Zylinder (231, 232) bestimmt werden. Mit dieser Anordnung wird überraschenderweise nur ein Drucksensor (6) benötigt, was ein deutlicher Vorteil gegenüber dem Stand der Technik ist. Es kann ein oder mehr als ein Drucksensor (6) eingesetzt werden.

Der Drucksensor (6) misst den Öldruck im Hydrauliksystem (23) und somit den Druck, welcher die Plattform (21) auf das Hydrauliksystem (23) ausübt. Mit Hilfe des Drucksensors (6)
- kann bestimmt werden, ob die Plattform (21) beladen ist,
- kann das Gewicht auf der Plattform (21) bestimmt werden, indem das Hydraulikventil (235) mindestens eines Hubzylinders (231) geöffnet und der Öldruck mittels Drucksensor (6) gemessen wird,
- kann das Lastmoment bestimmt werden, indem das Hydraulikventil (235) mindestens eines Neigezylinders (232) geöffnet und der Öldruck mittels Drucksensor (6) gemessen wird, sowie
- können die Bewegungsabläufe der Plattform (21) gezielt gesteuert und gegebenenfalls die Plattform (21) sofort gestoppt werden, sollte die Plattform (21) ein Körperteil oder einen Gegenstand einklemmen, indem der Drucksensor (6) der Druck der Hydraulikleitungen (233) bei geöffnetem Hydraulikventil (235) des Neigezylinders (232) misst, wobei zunächst Referenzwerte der leeren Plattform (21) ermittelt werden, und anschliessend bei jedem weiteren Heben, Senken, Öffnen oder Schliessen der Plattform (21) die gemessenen tatsächlichen Werte mit den erwarteten Referenzwerten verglichen werden, wobei bei einer plötzlichen Änderung der Messwerte und/oder bei einer Abweichung des Messwerte-Verlaufes gegenüber dem Verlauf der Referenzwerte die Bewegung der Plattform (21) gestoppt wird.

Der Drucksensor (6) ist mit einem Leitungskabel und/oder drahtlos, beispielsweise mittels Funkdatenübertragung, mit der Steuerelektronik (22) verbunden.

In einer bevorzugten Ausführungsform ist der Drucksensor (6) in einem Zwischenkreis der Hydraulikleitungen (233) des Hydrauliksystems (23), welches sowohl die Neige- (232) wie auch die Hubzylinder (231) speist, angeordnet, wobei
- der Zwischenkreis bevorzugt die Neige- wie auch die Hubzylinder (232, 231) speist, und/oder
- das Hydrauliksystem (23) mindestens ein Drosselventil (236) aufweist, welches sich bevorzugt in der rückseitigen Flussrichtung hin zum Hydrauliköltank befindet.

Dabei bewirkt Drosselventil (236), welches den Ölfluss drosselt, d.h. verlangsamt, dass das Hydrauliköl beim Öffnen und Absenken der Plattform (21) - und somit beim Öffnen der Hydraulikventile (235) der Neige- und/oder Hubzylinder (232, 231) - das Öl nicht drucklos abfliesst. Demzufolge kann auch beim Öffnen und Absenken der Plattform (21) ein Öldruck gemessen werden.

Geeignete Drucksensoren (6) sind dem Fachmann bekannt und im Handel erhältlich.

Unter dem Begriff Strom-/Spannungssensor (7) wird erfindungsgemäss ein Sensor, d.h. eine Messanordnung, verstanden, welcher sowohl die Stromstärke I in Ampere [A] wie auch die Stromspannung U in Volt [V] des Hydraulikmotors (234) misst. Dadurch kann gemäss Ohm'schen Gesetz auch der elektrische Widerstand R in Ohm [Ω] als auch die elektrische Leistung P in Watt [W] ermittelt werden. Es kann ein oder mehr als ein Strom-/Spannungssensor (7) eingesetzt werden.

Der Strom-/Spannungssensor (7) misst die elektrische Leistung, Spannung und/oder Stromstärke des Hydraulikmotors (234). Dabei wird die elektrische Leistungsaufnahme des Hydraulikmotors (234) für Bewegungen der Plattform (21) entgegen der Schwerkraft bestimmt. Diese berechnet sich aus dem Produkt der Motorenspannung (75), welcher der Fahrzeugspannung entspricht, mit dem Motorstrom (74), welcher sich am einfachsten ebenfalls mittels Spannungsmessung indirekt aus dem Spannungsabfall an der Motorenzuleitung ermitteln lässt, insbesondere dem Spannungsabfall in der Minusleitung (73). Es ist auch möglich nur den Motorenstrom (74) zu bestimmen, da die Motorenspannung (75) bekannt und konstant ist. Die Messung des Spannungsabfalls erfolgt bevorzugt an einer Motorzuleitung, vorzugsweise der Minusleitung (73). Dazu ist beispielsweise eine zusätzliche elektrische Leitung von der Steuerelektronik (22) an den Batterie-Minuspol (72) zu verlegen, um so die Potentialdifferenz zum Systemnullpunkt (71) der Hubladebühne (2) messen zu können. Oft ist der Batterie-Minuspol (72) eines LKW (9) direkt bei der Batterie mit dem Fahrzeugchassis elektrisch verbunden, sodass anstelle einer zusätzlichen Leitung zum Batterie-Minuspol (72) das Spannungspotential am Fahrzeugchassis abgegriffen werden kann.

Dabei wird mindestens ein, bevorzugt mehrere Strom-/Spannungssensoren (7) eingesetzt. Mit Hilfe des Strom-/Spannungssensors (7)
- kann bestimmt werden, ob die Plattform (21) beladen ist, indem bei Bewegungen entgegen der Schwerkraft die aktuelle Leistungsaufnahme des Hydraulikmotors (234) ermittelt und mit Referenzwerten der leeren Plattform (21) verglichen wird. Diese Leistungsaufnahme ist beim Heben einer Last proportional dem Gesamtgewicht der Last inklusive dem Gewicht der leeren Plattform (21). Beim Aufneigen einer Last ist die Leistungsaufnahme proportional der Summe von zwei Lastmomenten, nämlich jener der leeren Plattform (21) plus jener der zusätzlichen Beladung. Da die Referenzwerte für Gewicht und Lastmoment der leeren Plattform (21) konstant sind und einfach ermittelt und in der Steuerelektronik (22) gespeichert werden können, z.B. während der ersten Inbetriebnahme der Hubladebühne (2), kann das Lastmoment resp. das Gewicht der sich auf der Plattform (21) befindlichen Last durch einfache Subtraktion der Referenzwerte berechnet werden. Ergibt die Berechnung ein Gewicht von beispielsweise mehr als 30 kg, insbesondere von mehr als 60 kg, gilt die Plattform (21) als beladen. Sinngemäss gilt beim Lastmoment ein Gewicht von beispielsweise mehr als 30 kg, insbesondere von mehr als 60 kg und einem Schwerpunktsabstand von 1 m zur Ladekante resp. dem fahrzeugnahen Ende der horizontal gestellten Plattform (21) diese ebenfalls als beladen.
- kann das Gewicht auf der Plattform (21) bestimmt werden, indem die Hydraulikventile (235) der Hubzylinder (231) geöffnet, die Plattform (21) vertikal nach oben bewegt und mittels Strom-/Spannungssensor (7) die Leistung des Hydraulikmotors (234) gemessen wird,
- kann das Lastmoment bestimmt werden, indem die Hydraulikventile der Neigezylinder (232) geöffnet und die Plattform (21) nach oben aufgeneigt und mittels Strom-/ Spannungssensor (7) die Leistung des Hydraulikmotors (234) gemessen wird, und
- können die Bewegungsabläufe der Plattform (21) gezielt gesteuert und gegebenenfalls die Plattform (21) sofort gestoppt werden, sollte die Plattform (21) ein Körperteil oder einen Gegenstand einklemmen, indem der Strom-/Spannungssensors (7) die Leistungsaufnahme des Hydraulikmotors (234) misst, wobei zunächst Referenzwerte der leeren Plattform (21) ermittelt werden, und anschliessend bei jedem weiteren Heben, Senken, Öffnen oder Schliessen der Plattform (21) die gemessenen tatsächlichen Werte mit den erwarteten Referenzwerten verglichen werden, wobei bei einer plötzlichen Änderung der Messwerte und/oder bei einer Abweichung des Messwerte-Verlaufes gegenüber dem Verlauf der Referenzwerte die Bewegung der Plattform (21) gestoppt wird.

In einer bevorzugten Ausführungsform misst der Strom-/Spannungssensor (7) die aktuelle Leistung des Hydraulikmotors (234) und ist am Hydraulikmotor (234) oder dessen elektrischer Zuleitung angeordnet. Dabei werden bevorzugt zwei Spannungssensoren für die Motorspannung (75) und den Spannungsabfall (73) eingesetzt, welche vorzugsweise an der Minuszuleitung des Hydraulikmotors (234), welcher den Motorstrom (74) abbildet, angeordnet sind. Dabei stellt das Produkt der Motorspannung (75) und des Spannungsabfalls über der Motorzuleitung (73) die Motorleistung dar.

Umfasst das Sensorpaket (B) mindestens einen Strom-/Spannungssensor (7), wird bevorzugt auch mindestens ein Temperatursensor (81) eingesetzt, um die Temperatur, insbesondere die Umgebungstemperatur, zu messen. Dadurch kann beispielsweise der Motorzuleitungswiderstand genauer bestimmt werden, da der Spannungsabfall (73) am Motorzuleitungswiderstand, welcher mittels Strom-/Spannungssensor (7) ermittelt wird, temperaturabhängig ist. Auch der Innenwiderstand und somit die Leistungsfähigkeit der Fahrzeugbatterie ist stark von der Temperatur abhängig. Die Viskosität des Hydrauliköls hängt ebenfalls von der Temperatur ab, sodass insgesamt die Leistungsaufnahme des Hydraulikmotors (234) durch das aktuelle Klima resp. die Umgebungstemperatur mitbestimmt wird. Wenn diese Information der Steuerelektronik (22) bekannt ist, kann der Einfluss der Temperatur auf alle temperaturabhängigen Messwerte rechnerisch berücksichtigt werden, was zu genaueren Ergebnissen führt und den Einfluss extremer Temperaturunterschiede von Sommer und Winter auf die Sicherheitsfunktionen reduziert.

Geeignete Strom-/Spannungssensoren (7) sind dem Fachmann bekannt und im Handel erhältlich.

In einer ganz besonders bevorzugten Ausführungsform des Systems (1) sind die Hydraulikventile (235) des Hydrauliksystems (23) als on/off Magnet-Ventile (235a) und somit nicht als Proportional- oder Stetig- Ventile ausgebildet, und werden mittels Pulsweitenmodulation (PWM) gesteuert, wobei die on/off Magnet-Ventile (235a) bevorzugt an den Neigezylinder (232) und/oder Hubzylinder (231) angeordnet sind und die zu erzielende Bewegungsgeschwindigkeit der Plattform (21) mittels Inertialsensor (5) überwacht wird. Dabei sind die Magnet-Ventile (235a) bevorzugt an den Hydraulikzylindern (231, 232) angeordnet, können aber auch an beliebig anderer Stelle innerhalb des zu steuernden Ölkreislaufs angeordnet sein. Dabei muss mindestens ein Bewegungssignal des Sensorpakets (B) der zu steuernden Bewegung zugeordnet sein.

Mittels Pulsweitenmodulation (PWM) der Hydraulikventile (235) in Form von Magnet-Ventilen (235a) können diese mit der Steuerelektronik (22) so angesteuert werden, dass die Neigungsgeschwindigkeit der Plattform (21) begrenzt und/oder auf einen gemäss Bewegungsberechtigung vordefinierten Wert, d.h. auf einen Wert von maximal dem in der Bewegungsberechtigung hinterlegten Wert, bevorzugt höchstens 3°/s, abgebremst wird.

Somit können die Bewegungsabläufe der Plattform (21) mittels Pulsweitenmodulation (PWM) gezielt gesteuert werden. Hierzu werden bevorzugt Daten des Inertialsensors (5), des Drucksensors (6) wie auch des Strom-/ Spannungssensors (7) verwendet.

### Das Verfahren

Das erfindungsgemässe Verfahren zum sicheren Bedienen von Hubladebühnen (2) von LKWs mit dem erfindungsgemässen System (1) umfasst
i) Das Lokalisieren der mobilen Fernbedienung (3) mittels der Zonen-Lokalisierung (A), wodurch Bewegungsberechtigungen der Plattform (21) der Hubladebühne (2) bestimmt werden, und/oder
ii) Das Bestimmen mittels Sensorpaket (B) ob die Plattform (21) beladen ist, beim Bewegen einen Gegenstand einklemmt, und/oder zum gezielten Steuern der Bewegungsabläufe der Plattform (21), wobei
   - Mittels Inertialsensor (5) die Beschleunigung, der Winkel, die Winkelgeschwindigkeit und die Eigenfrequenz der Plattform (21) bestimmt wird, sowie gegebenenfalls
   - Mittels Drucksensors (6) das auf der Plattform (21) befindliche Gewicht gemessen und dessen Lastmoment bestimmt wird, und/oder
   - Mittels Strom-/Spannungssensor (7) die elektrische Leistung, die Spannung (75) und/oder Stromstärke (74) des Hydraulikmotors (234) bestimmt wird, wobei der Strom vorzugsweise indirekt über den Spannungsabfall an der Minusleitung (73) des Hydraulikmotors (234) gemessen wird.

In einer bevorzugten Ausführungsform des Verfahrens wird bei der Zonen-Lokalisierung (A) zur Bestimmung der Bewegungsberechtigungen der Plattform (21)
- eine erste für den Bediener sichere Zone Z1 bestimmt, in welcher eine uneingeschränkte Bedienung der Plattform (21) erlaubt ist, wobei die Zone Z1 eine Maximaldistanz D1, beispielsweise von 0.5 bis 1 m, zu mindestens einem Nahbereichssensor (4) aufweist,
- eine zweite Zone Z2 bestimmt wird, welche den Bereich der Plattform in waagerechter Position sowie zusätzlich seitlich und nach hinten eine Maximaldistanz D2, beispielsweise von 1m bis 2 m, zu den Plattformenden umfasst,
- eine dritte Zone Z3 als maximalen Arbeitsbereich bestimmt wird, wo eine eingeschränkte Bedienung erlaubt ist, wobei die Zone Z3 eine Maximaldistanz D3 zu mindestens einem Nahbereichssensor (4) aufweist,
- eine vierte Zone Z4 alles ausserhalb der Zone Z3 umfasst, wo keine Bedienung der Plattform (21) erlaubt ist, und
- eine fünfte Zone Z5 bestimmt wird, die ausschliesslich die Plattform (21) umfasst, indem durch das Sensorpaket (B) die Plattform (21) als beladen oder leer erkannt wird,
wobei aufgrund der jeweiligen Zonen Z1 bis Z5 sowie des mittels Inertialsensor (5) bestimmten aktuellen Plattformwinkels die zonen-spezifischen, vordefinierten Bewegungsberechtigungen, insbesondere die maximale Winkelgeschwindigkeit, beispielsweise 4°/sec, und der max. Neigungswinkel, beispielsweise +/-10°, nicht überschritten werden.

In einer anderen bevorzugten Ausführungsform des Verfahrens wird mittels Sensorpaket (B) bestimmt, ob die Plattform (21) beladen ist, wobei
- Mittels Inertialsensor (5) und/oder Drucksensor (6) und/oder Strom-/Spannungssensor (7) ermittelt wird, ob auf der Plattform (21) ein Gewicht ist, und falls ja,
- Mittels Inertialsensor (5) die Eigenfrequenz der Plattform (21) ermittelt wird, wodurch das Lastmoment und gegebenenfalls der Ort, wo sich das Gewicht befindet, erhalten wird,
- Das Gewicht bestimmt wird, indem
   o Das Hydraulikventil (235) mindestens eines Hubzylinders (231) geöffnet und der Öldruck mittels Drucksensor (6) gemessen wird, und/oder
   o Das Hydraulikventil (235) der Hubzylinder (231) geöffnet, die Plattform (21) vertikal nach oben bewegt und mittels Strom-/Spannungssensor (7) die Leistung des Hydraulikmotors (234) gemessen wird, und/oder
- Das Lastmoment bestimmt wird, indem
   o Das Hydraulikventil (235) mindestens eines Neigezylinders (232) geöffnet und der Öldruck mittels Drucksensor (6) gemessen wird,
   o Das Hydraulikventil (235) der Neigezylinder (232) geöffnet und die Plattform (21) nach oben aufgeneigt, d.h. eine Schliess- und/oder Aufneigebewegung erfolgt, und mittels Strom-/ Spannungssensor (7) die Leistung des Hydraulikmotors (234) gemessen wird, und/oder
   o Die Eigenfrequenz der Plattform (21) mit dem Inertialsensor (5) bestimmt wird.

In einer weiteren bevorzugten Ausführungsform des Verfahrens wird mittels Sensorpaket (B) bestimmt, ob beim Bewegen der, insbesondere leeren, Plattform (21) ein Körperteil, insbesondere ein Körperteil des Bedieners, und/oder ein Gegenstand eingeklemmt wird, wobei beim Bewegen, d.h. beim Heben, Senken, Öffnen und/oder Schliessen, der Plattform (21) mittels
- Inertialsensor (5) die Winkel-Beschleunigung, Winkelgeschwindigkeit und der Winkel, insbesondere der Neigungswinkel, der Plattform (21),
- Drucksensor (6) der Druck der Hydraulikleitungen (233) bei geöffnetem Hydraulikventil (235) des Neigezylinders (232), und/oder
- Strom-/Spannungssensor (7) die Leistungsaufnahme des Hydraulikmotors (234)
zunächst Referenzwerte der leeren Plattform (21) ermittelt werden, und anschliessend bei jedem weiteren Heben, Senken, Öffnen oder Schliessen der Plattform (21) die aktuell gemessenen Werte mit den erwarteten Referenzwerten verglichen werden, wobei bei einer plötzlichen Änderung der Messwerte und/oder bei einer vordefinierten Abweichung des Messwerte-Verlaufes über den vorgegebenen Toleranzwert gegenüber dem Verlauf der Referenzwerte die Bewegung der Plattform (21) gestoppt wird.

Dadurch kann die Plattform (21), wenn sie beim Bewegen einen Körperteil des Bedieners oder einen Gegenstand einklemmt, mittels Steuerelektronik (22) sofort gestoppt werden, wodurch Unfälle vermieden werden können. Daher wird dieser Effekt auch «Einklemmschutz» genannt. Überraschenderweise reagiert das Sensorpaket (B) in Bezug auf den Effekt «Einklemmschutz» beim gefährlichen Schliessvorgang mit leerer Plattform (21) äusserst sensibel, sodass ein Druck auf den eingeklemmten Körperteil oder Gegenstand von weniger als beispielsweise 30 kg, insbesondere von weniger als 10 kg, wirken, bevor die Plattform (21) gestoppt wird. Mit der Angabe in kg ist hier die äquivalente Gewichtskraft senkrecht zur Erdoberfläche gemeint, welche dieses Gewicht auf einen Körperteil ausüben würde, welche bei 10 kg einer Kraft von ca. 100 Newton entspricht.

Der Einklemmschutz ist auch anwendbar beim Hebevorgang, hier besteht eine Gefahr für die Füsse des Bedieners, kurz bevor die Plattform (21) die obere Endstellung auf Höhe der Ladefläche erreicht und sich der Abstand zwischen der fixen Gummileiste und der Plattform (21) bis auf null reduziert, wenn der Endanschlag erreicht ist. Beim Heben einer schweren Last, die je nach Nennlast der Hubladebühne bis 1000 kg oder noch mehr betragen kann, reagiert der Einklemmschutz möglicherweise erst bei 100 kg, also zu wenig sensibel, um zuverlässig beispielsweise Füsse oder Zehen schützen zu können, besonders wenn die gefährdete Person keine Stahlkappenschuhe trägt. Für diesen Fall wird beispielsweise vorgeschlagen, die Gummileiste als Schaltleiste auszuführen und deren Schaltkontakt mit der Steuerelektronik (22) zu verbinden, damit diese die Bewegung der Plattform (21) stoppt, wenn auf die Schaltleiste resp. Gummileiste von unten eine Kraft von mehr als 5 kg einwirkt.

Wenn der Einklemmschutz anspricht und die Bewegung der Plattform (21) stoppt, wird zusätzlich vorgeschlagen, den Druck im Hydrauliksystem (23) mittels der Hydraulikventile (235) sofort zu entlasten, ohne jedoch den Hydraulikmotor (234) einzuschalten, indem beispielsweise für kurze Zeit, vorzugsweise 0.3s bis maximal 1 s die Plattform (21) automatisch in die entgegengesetzte Richtung bewegt wird, bevor sie dann endgültig stoppt. Dadurch kann ein soeben eingeklemmtes Körperteil resp. Gegenstand mühelos befreit werden, ohne dass zuerst ein weiterer Bedienereingriff notwendig ist. Zusätzlich schlagen wir aus Sicherheitsüberlegungen vor, dass die Steuerelektronik (22) jene Bewegungsrichtung der Plattform (21), welche den Einklemmschutz ausgelöst hat, während einer Zeit von etwa 1 s sperrt, sodass dieselbe Bewegungsrichtung erst dann fortgesetzt werden kann, wenn vorgängig während mindestens 1 s an der mobilen Fernbedienung (3) keine Taste mehr betätigt wurde.

In einer anderen bevorzugten Ausführungsform des Verfahrens werden mittels Inertialsensor (5) des Sensorpakets (B) und der Steuerelektronik (22) die Bewegungsabläufe der Plattform (21) gezielt gesteuert, wobei
- die Hydraulikventile (235) des Hydrauliksystems (23) als on/off Magnet-Ventile (235a) ausgebildet und bevorzugt an den Neigezylinder (232) und/oder Hubzylinder (231) angeordnet werden,
- Gemäss Anspruch 11 ermittelt wird, ob die Plattform (21) beladen ist, und wenn ja,
- Die Hydraulikventile (235) mittels Pulsweitenmodulation (PWM) durch die Steuerelektronik (22) so angesteuert werden, dass die Neigungsgeschwindigkeit der Plattform (21) begrenzt und/oder auf einen gemäss Bewegungsberechtigung vordefinierten Wert, insbesondere auf einen Wert von maximal dem in der Bewegungsberechtigung vorgängig hinterlegten Wert, beispielsweise höchstens 3°/s, abgebremst wird, sowie
- Die Hydraulikventile (235) und der Hydraulikmotor (234) durch die Steuerelektronik (22) so angesteuert werden, dass die Bewegung der Plattform (21) stoppt, sobald der Neigungswinkel der Plattform (21) den gemäss Bewegungsberechtigung vordefinierten Wert, bevorzugt +/-10°, übersteigt.

Diese Ausführungsform wird auch «Plattformbremse» genannt.

### Die Verwendung

Verwendung des erfindungsgemässen Systems (1) und des erfindungsgemässen Verfahrens zum sicheren Bedienen von Hubladebühnen (2) von LKWs.

Eine besonders bevorzugte Verwendung des Systems (1) umfasst die Zonen-Lokalisierung (A), d.h. die Lokalisation der mobilen Fernbedienung (3) und somit auch zur Lokalisierung des Bedieners. Bewegt sich der Bediener in einer unsicheren, d.h. Unfall-gefährdeten Zone, erlaubt das System (1) die Bedienung der Plattform (21) einzuschränken oder ganz - insbesondere sofort - zu stoppen.

Eine weitere bevorzugte Verwendung des Systems (1) umfasst die Bestimmung des Gewichts auf der Plattform (21) und des darauf befindlichen Lastmoments.

Eine andere bevorzugte Verwendung des Systems (1) umfasst den Einklemmschutz, d.h. das sofortige Stoppen der Plattform (21), wenn diese einen Körperteil und/oder einen Gegenstand einklemmt.

Eine wiederum andere bevorzugte Verwendung des Systems (1) umfasst die Plattformbremse, mit welcher die Plattform (21) gezielt gesteuert und notfalls gestoppt werden kann.

Somit führen die erfindungsgemässen Verwendungen zu einer deutlich erhöhten Sicherheit für Personen und Güter und einer stark reduzierten Unfallwahrscheinlichkeit. Ein flüssiger und natürlicher Arbeitsablauf wird unterstützt, was wertvolle Zeit spart und die Arbeitszufriedenheit erhöht.

Es werden folgende Bezugszeichen verwendet:
- 1: System (1)
- 2: Hubladebühne (2)
- 21: Plattform (21)
- 22: Steuerelektronik (22)
- 23: Hydrauliksystem (23)
- 231: Hubzylinder (231)
- 232: Neigezylinder (232)
- 233: Hydraulikleitungen (233)
- 234: Hydraulikmotor (234)
- 235: Hydraulikventile (235)
- 235a: Magnet-Ventile (235a)

- 235a-HZ: Magnet-Ventile Hubzylinder (235a-HZ)
- 235a-NZ: Magnet-Ventile Neigezylinder (235a-NZ)
- 235-WV: Wegeventil (235-WV)
- 236: Drosselventil (236)
- 3: mobile Fernbedienung (3)
- 4: Nahbereichssensoren (4) der Zonen-Lokalisierung (A)
- 5: Inertialsensor (5) des Sensorpakets (B)
- 6: Drucksensor (6) des Sensorpakets (B)
- 7: Strom-/Spannungssensor (7) des Sensorpakets (B)
- 71: Systemnullpunkt (71)
- 72: Batterie-Minuspol (72)
- 73: Spannungsabfall-Minusleitung (73)
- 74: Motorstrom (74)
- 75: Motorspannung (75)
- 8: Optionale Sensoren
- 81: Temperatursensor (81)
- 82: Schaltleiste (82)
- 9: LKW
- 91: Koffer (91) des LKW (9)
- 92: Fahrerhaus (92) des LKW (9)
- Z1: Zone 1
- Z2: Zone 2
- Z3: Zone 3
- Z4: Zone 4
- Z5: Zone 5

Im Folgenden werden nicht-limitierende, bevorzugte Ausführungsformen des erfindungsgemässen Systems (1) mit der Zonen-Lokalisierung und/oder einem Sensorpaket anhand der nachfolgenden Zeichnungen beschrieben.

Diese sind nicht einschränkend auszulegen und werden als Bestandteil der Beschreibung verstanden:

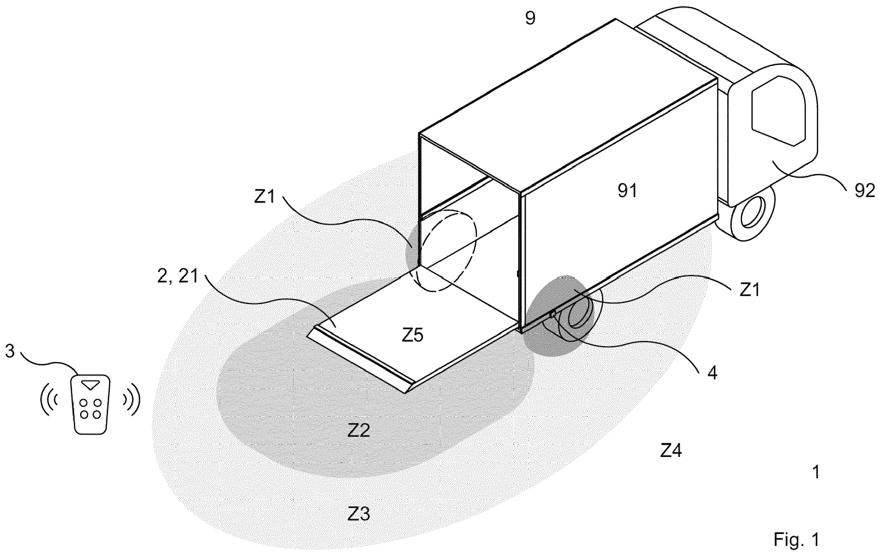

- Fig. 1: offenbart einen LKW (9) mit Hubladebühne (2), Kofferaufbau (91), Fahrerhaus (92) und offener, horizontal positionierter Plattform (21) auf Höhe der Ladefläche, also im oberen Endanschlag der Gummileiste. Es werden fünf Bedienzonen (Z1), (Z2), (Z3), (Z4) und (Z5) der Zonenlokalisierung (A) unterschieden, wo sich der Bediener mit der mobilen Fernbedienung (3) aufhalten kann. Die Zonen (Z1), (Z2), (Z3) und (Z4) können mittels der Nahbereichssensoren (4) ermittelt werden.

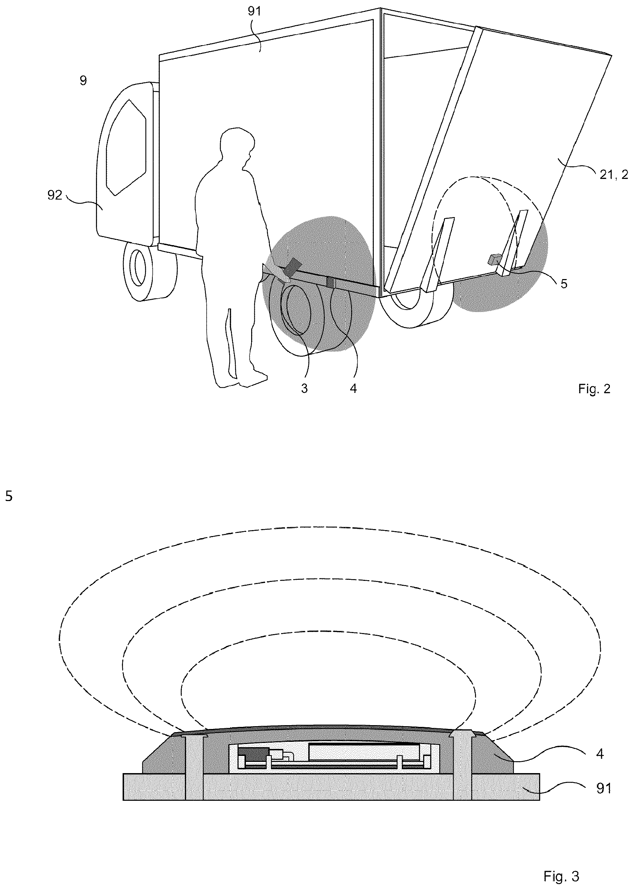

- Fig. 2: zeigt einen LKW (9) mit einem Kofferaufbau (91), dem Fahrerhaus (92) und einer Hubladebühne (2) mit nicht ganz geschlossener Plattform (21), sowie einer Bedienperson mit mobiler Fernbedienung (3) in der Nahbereichszone (Z1) des linksseitigen Nahbereichssensors (4). An der Aussenseite der Plattform (21) ist im unteren Bereich der Inertialsensor (5) montiert. Die Nahbereichszone (Z1), ausgehend von den beiden Nahbereichssensoren (4) ist symmetrisch auf beiden Seiten des LKW-Hecks vorhanden und ist aufgrund der Richtcharakteristik der beiden Nahbereichssensoren (4) beidseitig des Koffers (91) hauptsächlich nach aussen gerichtet. Wenn sich der LKW-Fahrer im Fahrerhaus (92) befindet, darf dieser mit der mobilen Fernbedienung (3) die Plattform (21) nicht bewegen können.
- Fig. 3: zeigt den Schnitt des als Patchantenne ausgeführten flachen Nahbereichssensor (4), welcher unten am Kofferaufbau (91) des LKWs (9) montiert ist. Die gestrichelten Linien symbolisieren die halbkreis- bzw. halbkugelförmige Richtcharakteristik des Sensors (4) bzw. im konkreten Fall der Patchantenne

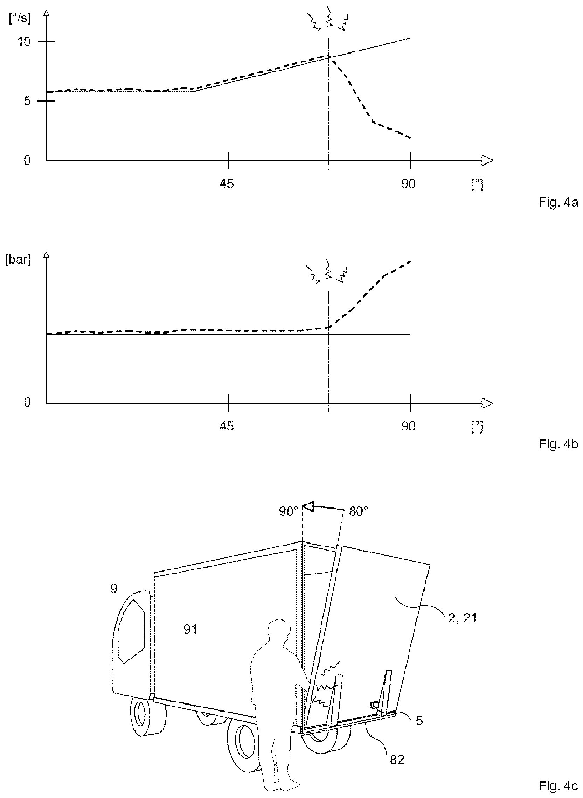

- Fig. 4a: zeigt beispielhaft einen möglichen Verlauf der Winkelgeschwindigkeit einer leeren Plattform (21), gemessen mit dem Inertialsensor (5) während dem Schliessvorgang. Die durchgehende Linie stellt den erwarteten Referenzverlauf und die gestrichelte Linie den effektiv aktuell gemessenen Verlauf dar. Trifft die Plattform (21) auf ein Hindernis, wird die Winkelgeschwindigkeit sofort deutlich abgebremst und die Differenz zum Referenzwert übersteigt einen Toleranzwert
- Fig. 4b: zeigt beispielhaft einen möglichen Verlauf des Hydraulikdrucks einer leeren Plattform (21), gemessen mit dem Drucksensor (6) während dem Schliessvorgang. Die durchgehende Linie stellt den erwarteten Referenzverlauf und die gestrichelte Linie den effektiv aktuell gemessenen Verlauf dar. Trifft die Plattform (21) auf ein Hindernis, steigt der Druck in den Hydraulikleitungen (233) sofort deutlich an und die Differenz zum Referenzverlauf übersteigt einen Toleranzwert
- Fig. 4c: zeigt die gefährliche Situation beim Schliessvorgang in dem Moment, wo die Plattform (21) auf das Hindernis auftrifft, hier einen Arm des Bedieners, der zwischen dem Koffer (91) eingeklemmt wird. Der Inertialsensor (5) registriert dabei kleinste Plattformbewegungen. Eine Schaltleiste (82) schützt den Bediener bei der vertikalen Hubbewegung der horizontal gestellten Plattform (21), wenn Zehen oder die Füsse eingeklemmt werden.
- Fig. 5: zeigt schematisch den Zusammenhang zwischen der Fahrzeug- Elektrik, der Sensorik (A, B) und der Hydraulik (23). Insbesondere ist hier dargestellt, wie mit dem Strom-/Spannungssensor (7) die Leistung des Hydraulikmotors (234) ermittelt werden kann, indem der Motorstrom (74) einen Spannungsabfall (73) an der Minusleitung hervorruft und die Motorspannung (75) über die Spannungsversorgung der Steuerelektronik (22) ermittelt wird. Der elektrische Systemnullpunkt (71) der Hubladebühne (2) resp. der Steuerelektronik (22) befindet sich beim Hydraulikmotor (234) und unterscheidet sich um den Spannungsabfall (73) auf der Minus-Motorzuleitung vom Fahrzeug-Massepotential des Batterie-Minuspols (72). Es wird auch gezeigt, wie mittels Pulsweitenmodulation (PWM) sowohl die Magnet-Ventile (235a-HZ) der Hubzylinder (231) wie auch die Magnet-Ventile (235a-NZ) der Neigezylinder (232) angesteuert werden und wie der Inertialsensor (5) die daraus resultierenden Bewegungen der Plattform (21) der Steuerelektronik (22) rückmeldet. Auch der Drucksensor (6) an den Hydraulikleitungen (233) sowie die optionalen Sensoren (8) des Sensorpakets (B) sind dargestellt. Die mobile Fernbedienung (3) kommuniziert mittels der Nahbereichssensoren (4) der Zonenlokalisierung (A) mit der Steuerelektronik (22), die mittels Magnetventil den Hydraulikmotor (234) ein- oder ausschaltet sowie weitere Magnetventile (235a) des Hydrauliksystems (23) ansteuert.

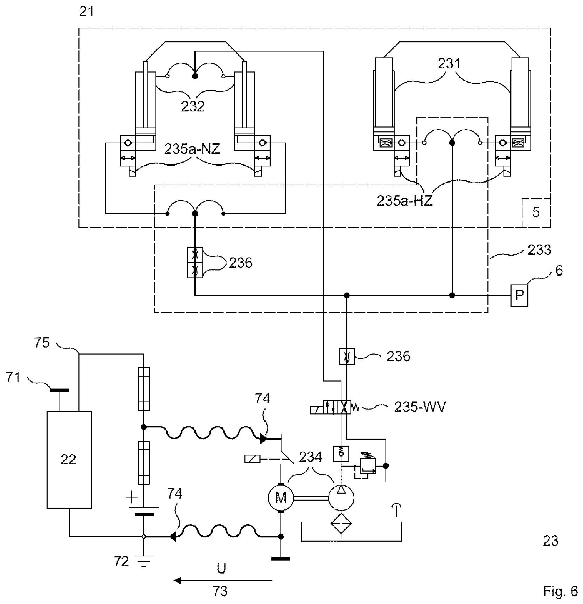

- Fig. 6: zeigt beispielhaft eine mögliche Ausführungsform des Hydrauliksystems (23) von Hubladebühnen (2) der vorliegenden Erfindung. Dargestellt werden hier insbesondere der Zwischenkreis der Hydraulikleitungen (233), wo der Drucksensor (6) vorteilhafterweise angeordnet wird sowie ein Drosselventil (236) am Ausgang des Zwischenkreises (233) bei der Flussrichtung hin zum Hydrauliköltank. Die elektrische Seite des Hydraulikmotors (234) treibt eine Hydraulikpumpe an, die das Hydrauliköl unter hohem Druck über die Hydraulikleitungen (233) des Zwischenkreises an die beiden Hubzylinder (231) sowie an die beiden Neigezylinder (232) leiten kann. Mit dem Wegeventil (235-WV) kann die Flussrichtung des Hydrauliköls und damit die Bewegungsrichtung der Plattform (21) umgeschaltet werden. Das Drosselventil (236) begrenzt die maximal mögliche Bewegungsgeschwindigkeit der Plattform (21), indem es den Öldurchfluss bei Bewegungen der Plattform (21) entgegen der Schwerkraft verlangsamt, sodass es möglich wird, am Drucksensor (6) überhaupt einen Druck messen zu können. Die Plattform (21) wird vertikal nach oben bewegt, wenn der Hydraulikmotor (234) eingeschaltet, das Wegeventil (235-WV) in der gezeichneten Ruhestellung ist und die Magnetventile (235a-HZ) geöffnet sind, sodass das Hydrauliköl in die Hubzylinder (231) strömt und die Plattform (21) antreibt. Die Plattform (21) wird nach oben aufgeneigt resp. in Schliessrichtung bewegt, wenn der Hydraulikmotor (234) eingeschaltet, das Wegeventil (235-WV) in der gezeichneten Ruhestellung ist und die Magnetventile (235a-NZ) geöffnet sind, sodass das Hydrauliköl in die Neigezylinder (232) strömt und die Plattform (21) antreibt. Für Bewegungen der Plattform (21) mit der Schwerkraft muss das Wegeventil (235-WV) eingeschaltet werden, zusätzlich müssen auch die Magnetventile (235a) der zu bewegenden Hydraulikzylinder (231, 232) eingeschaltet werden. Der Stromkreis des Hydraulikmotors (234) mit dem Spannungsabfall in der Minusleitung (73) aufgrund des Motorstroms (74) sind hier ebenfalls dargestellt. Die Steuerelektronik (22) misst zudem die Motorspannung (75) gegenüber dem Systemnullpunkt (71), der sich vom Potential am Batterie-Minuspol (72) um den Spannungsabfall (73) an der Motorzuleitung unterscheidet.

## Patentansprüche

1. System (1) zum sicheren Bedienen von Hubladebühnen (2) von LKWs, umfassend einen LKW (9) mit einem mittels Hubladebühne (2) schliessbaren Ladebereich sowie eine mobile Fernbedienung (3), wobei die Hubladebühne (2) eine Plattform (21), eine Steuerelektronik (22) und ein Hydrauliksystem (23) mit Hubzylinder (231), Neigezylinder (232), Hydraulikleitungen (233), Hydraulikmotor (234) sowie Hydraulikventilen (235) umfasst, **dadurch gekennzeichnet, dass** das System (1)
- eine Zonen-Lokalisierung (A) zur Lokalisation der mobilen Fernbedienung (3) aufweist, umfassend mindestens zwei Nahbereichssensoren (4) zum Empfangen und gegebenenfalls Senden von Signalen der mobilen Fernbedienung (3), wobei
- An jeder Seite des hinteren Bereichs des LKW (9) ein Nahbereichssensor (4) angeordnet ist, und
- Die Dämpfung der Signalleistung der Nahbereichssensoren (4) zur LKW-Seite im Richtdiagramm ist zur LKW-Seite um mindestens 6 dB höher als in die entgegengesetzte Richtung,
und/oder
- Ein Sensorpaket (B) zur Bestimmung, ob die Plattform (21) beladen ist, beim Bewegen einen Gegenstand einklemmt, und/oder zum gezielten Steuern der Bewegungsabläufe der Plattform (21), wobei das Sensorpaket (B)
b1) Einen Inertialsensor (5), sowie gegebenenfalls
b2) Einen an den Hydraulikleitungen (233) des Hydrauliksystems (23) angeordneten Drucksensor (6) zur Bestimmung des auf der Plattform (21) befindlichen Gewichts und dessen Lastmoments, und/oder
b3) Einen Strom-/Spannungssensor (7) zur Bestimmung der elektrischen Leistung, Spannung (75) und/oder Stromstärke (74) des Hydraulikmotors (234) umfasst,
und die Steuerelektronik (22) mit den Nahbereichssensoren (4), dem Inertialsensor (5), dem Drucksensor (6) und/oder dem Strom-/ Spannungssensor (7) verbunden ist, um die von den Sensoren (4, 5, 6, 7, 8) empfangenen Signale in der Steuerelektronik (22) zu verarbeiten und die Bewegungen der Plattform (21) mittels Ansteuerung der Hydraulikventile (235) und des Hydraulikmotors (234) gezielt zu steuern und zu überwachen.

2. System (1) nach Anspruch 1, **dadurch gekennzeichnet, dass** die mobile Fernbedienung (3) mit der Steuerelektronik (22) mittels Funkwellen, Ultraschallwellen, Magnetwellen, Lichtwellen und/oder kabelgebunden kommuniziert.

3. System (1) nach Anspruch 1 oder 2, **dadurch gekennzeichnet, dass** die Nahbereichssensoren (4) der Zonen-Lokalisierung (A)
- am hinteren Bereich des LKW (9) einander gegenüber symmetrisch angeordnet sind,
- 0 bis 1.5 m, bevorzugt 0.3 m bis 1 m, gemessen in horizontaler Richtung von der Heckkante des LKW (9) angeordnet sind,
- am seitlichen, unteren Bereich des LKW-Koffers (91) angeordnet sind, wobei der Koffer (91) bevorzugt als Reflektor für die Signalübertragung zwischen den Nahbereichssensoren (4) und der mobilen Fernbedienung (3) ausgebildet ist, und/oder
- in Form von Patchantennen vorliegen, besonders wenn diese auf Metall montiert sind.

4. System (1) nach mindestens einem der Ansprüche 1 bis 3, **dadurch gekennzeichnet, dass** der Inertialsensor (5) an der Plattform (21) angeordnet ist, bevorzugt an einer vor Beschädigung gut geschützten Stelle aussen im unteren Teil der Plattform, oder an ähnlicher Stelle innen in einem Hohlraum der Plattform.

5. System (1) nach mindestens einem der Ansprüche 1 bis 4, **dadurch gekennzeichnet, dass** der Drucksensor (6) in einem Zwischenkreis der Hydraulikleitungen (233) des Hydrauliksystems (23) angeordnet ist, wobei
- der Zwischenkreis bevorzugt die Neige- wie auch die Hubzylinder (232, 231) speist, und/oder
- das Hydrauliksystem (23) mindestens ein Drosselventil (236) aufweist, welches sich bevorzugt in der rückseitigen Flussrichtung hin zum Hydrauliköltank befindet

6. System (1) nach mindestens einem der Ansprüche 1 bis 5, **dadurch gekennzeichnet, dass** der Strom-/Spannungssensor (7) die aktuelle Leistung des Hydraulikmotors (234) misst und am Hydraulikmotor (234) oder dessen elektrischer Zuleitung angeordnet ist.

7. System (1) nach mindestens einem der Ansprüche 1 bis 6, **dadurch gekennzeichnet, dass** die mobile Fernbedienung (3) einen mehrachsigen Inertialsensor (5) aufweist.

8. System (1) nach mindestens einem der Ansprüche 1 bis 7, **dadurch gekennzeichnet, dass** die Hydraulikventile (235) des Hydrauliksystems (23) als on/off Magnet-Ventile (235a) und somit nicht als Proportional- oder Stetig- Ventile ausgebildet sind, und mittels Pulsweitenmodulation (PWM) gesteuert sind, wobei die on/off Magnet-Ventile (235a) bevorzugt an den Neigezylinder (232) und/oder Hubzylinder (231) angeordnet sind und die zu erzielende Bewegungsgeschwindigkeit der Plattform (21) mittels Inertialsensor (5) überwacht wird.

9. Verfahren zum sicheren Bedienen von Hubladebühnen (2) von LKWs mit dem System (1) nach mindestens einem der Ansprüche 1 bis 8, umfassend
i) Das Lokalisieren der mobilen Fernbedienung (3) mittels der Zonen-Lokalisierung (A), wodurch Bewegungsberechtigungen der Plattform (21) der Hubladebühne (2) bestimmt werden, und/oder
ii) Das Bestimmen mittels Sensorpaket (B) ob die Plattform (21) beladen ist, beim Bewegen einen Gegenstand einklemmt, und/oder zum gezielten Steuern der Bewegungsabläufe der Plattform (21), wobei
- Mittels Inertialsensor (5) die Beschleunigung, der Winkel, die Winkelgeschwindigkeit und die Eigenfrequenz der Plattform (21) bestimmt wird, sowie gegebenenfalls
- Mittels Drucksensors (6) das auf der Plattform befindliche Gewicht gemessen und dessen Lastmoment bestimmt wird, und/oder
- Mittels Strom-/Spannungssensor (7) die elektrische Leistung, die Spannung (75) und/oder Stromstärke (74) des Hydraulikmotors (234) bestimmt wird, wobei der Strom vorzugsweise indirekt über den Spannungsabfall an der Minusleitung (73) des Hydraulikmotors (234) gemessen wird.

10. Verfahren nach Anspruch 9, **dadurch gekennzeichnet, dass** bei der Zonen-Lokalisierung (A) zur Bestimmung der Bewegungsberechtigungen der Plattform (21)
- eine erste für den Bediener sichere Zone Z1 bestimmt wird, in welcher eine uneingeschränkte Bedienung der Plattform (21) erlaubt ist, wobei die Zone Z1 eine Maximaldistanz D1 zu mindestens einem Nahbereichssensor (4) aufweist,
- eine zweite Zone Z2 bestimmt wird, welche den Bereich der Plattform in waagerechter Position sowie zusätzlich seitlich und nach hinten eine Maximaldistanz D2 zu den Plattformenden umfasst,
- eine dritte Zone Z3 als maximalen Arbeitsbereich bestimmt wird, wo eine eingeschränkte Bedienung erlaubt ist, wobei die Zone Z3 eine Maximaldistanz D3 zu mindestens einem Nahbereichssensor (4) aufweist,
- eine vierte Zone Z4 alles ausserhalb der Zone Z3 umfasst, wo keine Bedienung der Plattform (21) erlaubt ist, und
- eine fünfte Zone Z5 bestimmt wird, die ausschliesslich die Plattform (21) umfasst, indem durch das Sensorpaket (B) die Plattform (21) als beladen oder leer erkannt wird,
wobei aufgrund der jeweiligen Zonen Z1 bis Z5 sowie des mittels Inertialsensor (5) bestimmten aktuellen Plattformwinkels die zonen-spezifischen, vordefinierten Bewegungsberechtigungen, insbesondere die max. Winkelgeschwindigkeit und der max. Neigungswinkel, nicht überschritten werden.

11. Verfahren nach Anspruch 9, wobei mittels Sensorpaket (B) bestimmt wird, ob die Plattform (21) beladen ist, **dadurch gekennzeichnet, dass**
- Mittels Inertialsensor (5) und/oder Drucksensor (6) und/oder Strom-/Spannungssensor (7) ermittelt wird, ob auf der Plattform (21) ein Gewicht ist, und falls ja,
- Mittels Inertialsensor (5) die Eigenfrequenz der Plattform (21) ermittelt wird, wodurch das Lastmoment und gegebenenfalls der Ort, wo sich das Gewicht befindet, erhalten wird,
- Das Gewicht bestimmt wird, indem
o Das Hydraulikventil (235) mindestens eines Hubzylinders (231) geöffnet und der Öldruck mittels Drucksensor (6) gemessen wird, und/oder
o Die Hydraulikventile (235) der Hubzylinder (231) geöffnet, die Plattform (21) vertikal nach oben bewegt und mittels Strom-/Spannungssensor (7) die Leistung des Hydraulikmotors (234) gemessen wird, und/oder
- Das Lastmoment bestimmt wird, indem
o Das Hydraulikventil (235) mindestens eines Neigezylinders (232) geöffnet und der Öldruck mittels Drucksensor (6) gemessen wird,
o Das Hydraulikventil (235) der Neigezylinder (232) geöffnet und die Plattform (21) nach oben aufgeneigt und mittels Strom-/ Spannungssensor (7) die Leistung des Hydraulikmotors (234) gemessen wird, und/oder
o Die Eigenfrequenz der Plattform (21) mit dem Inertialsensor (5) bestimmt wird.

12. Verfahren nach Anspruch 9 oder 11, wobei mittels Sensorpaket (B) bestimmt wird, ob beim Bewegen der, insbesondere leeren, Plattform ein Körperteil und/oder ein Gegenstand eingeklemmt wird, **dadurch gekennzeichnet, dass** beim Bewegen der Plattform (21) mittels
- Inertialsensor (5) die Winkel-Beschleunigung, Winkelgeschwindigkeit und der Winkel der Plattform (21),
- Drucksensor (6) der Druck der Hydraulikleitungen (233) bei geöffnetem Hydraulikventil (235) des Neigezylinders (232), und
- Strom-/Spannungssensor (7) die Leistungsaufnahme des Hydraulikmotors (234)
zunächst Referenzwerte der leeren Plattform (21) ermittelt werden, und anschliessend bei jedem weiteren Heben, Senken, Öffnen oder
Schliessen der Plattform (21) die gemessenen aktuellen Werte mit den erwarteten Referenzwerten verglichen werden, wobei bei einer plötzlichen Änderung der Messwerte und/oder bei einer Abweichung des Messwerte-Verlaufes über den vorgegebenen Toleranzwert gegenüber dem Verlauf der Referenzwerte die Bewegung der Plattform (21) gestoppt wird.

13. Verfahren nach Anspruch 9 oder 11 bis 12, wobei mittels Inertialsensor (5) des Sensorpakets (B) und der Steuerelektronik (22) die Bewegungsabläufe der Plattform (21) gezielt gesteuert werden, **dadurch gekennzeichnet, dass**
- die Hydraulikventile (235) des Hydrauliksystems (23) als on/off Magnet-Ventile (235a) ausgebildet und bevorzugt an den Neigezylinder (232) und/oder Hubzylinder (231) angeordnet werden,
- Gemäss Anspruch 11 ermittelt wird, ob die Plattform (21) beladen ist, und wenn ja,
- Die Hydraulikventile (235) mittels Pulsweitenmodulation (PWM) durch die Steuerelektronik (22) so angesteuert werden, dass die Neigungsgeschwindigkeit der Plattform (21) begrenzt und/oder auf einen gemäss Bewegungsberechtigung vordefinierten Wert abgebremst wird, sowie
- Die Hydraulikventile (235) und der Hydraulikmotor (234) durch die Steuerelektronik (22) so angesteuert werden, dass die Bewegung der Plattform (21) stoppt, sobald der Neigungswinkel der Plattform (21) den gemäss Bewegungsberechtigung vordefinierten Wert übersteigt.

14. Verwendung des Systems (1) nach mindestens einem der Ansprüche 1 bis 8 zum sicheren Bedienen von Hubladebühnen (2) von LKWs.
